# EUROPÄISCHE PATENTSCHRIFT

(11) **EP 3 750 668 B1**
(45) Veröffentlichungstag und Bekanntmachung des Hinweises auf die Patenterteilung: **09.03.2022**
(21) Anmeldenummer: 20175148.4
(22) Anmeldetag: 18.05.2020
(51) Int. Cl.: B25B 1/12, F16H 25/20, F16B 37/08

(54) **SPANNVORRICHTUNG ZUM EINSPANNEN EINES GEGENSTANDES**
TENSIONING DEVICE FOR TENSIONING AN OBJECT
DISPOSITIF DE SERRAGE PERMETTANT DE SERRER UN OBJET

(30) Priorität: 06.06.2019 DE 102019115398
(43) Veröffentlichungstag der Anmeldung: 16.12.2020
(73) Patentinhaber: Franz Haimer Maschinenbau KG, 86568 Hollenbach-Igenhausen (DE)
(72) Erfinder: Haimer, Franz, 86568 Hollenbach-Igenhausen (DE)
(74) Vertreter: Schwarz, Wolfgang

(56) Entgegenhaltungen:
- WO-A1-2017/025118
- DE-A1- 3 228 646
- US-A- 2 708 854

## Beschreibung

Die Erfindung betrifft eine Spannvorrichtung zum Einspannen eines Gegenstands nach dem Oberbegriff des Patentanspruchs 1, eine Vorrichtung mit der Spannvorrichtung nach Patentanspruch 18 und einen Schraubstock mit der Spannvorrichtung nach Patentanspruch 19.

Es ist allgemein bekannt, Bauteile mittels Schraubverbindungen zu verbinden. Dabei wird regelmäßig eine Schraube mit einem Gewindeabschnitt durch durchgängige Ausnehmungen der zu verbindenden Bauteile geführt und anschließend eine Schraubenmutter in Gewindeeingriff mit dem Gewindeabschnitt der Schraube gebracht. Die Schraubenmutter wird dann auf die Schraube aufgeschraubt, bis die Bauteile zwischen der Schraubenmutter und einem Schraubenkopf der Schraube eingespannt sind.

Des Weiteren ist es auch bekannt, einen Schraubstock zu verwenden, um ein zu bearbeitendes Werkstück während seiner Bearbeitung fest einzuspannen. Ein Schraubstock weist üblicherweise eine axial drehbar an einem, eine erste Spannbacke aufweisenden ersten Spannbackenelement gehalterte Gewindespindel und ein in Gewindeeingriff mit der Gewindespindel befindliches Mutterelement auf. Das Mutterelement ist dabei drehfest an einem zweiten Spannbackenelement des Schraubstocks mit einer zweiten Spannbacke gehaltert. Zudem ist das erste Spannbackenelement üblicherweise linear verlagerbar an dem zweiten Spannbackenelement gehaltert, während das zweite Spannbackenelement ortsfest festgelegt ist. Durch Drehbetätigung der Gewindespindel kann die erste Spannbacke dabei hin zu der zweiten Spannbacke verlagert und somit ein zwischen den Spannbacken befindliches Werkstück fest eingespannt werden.

Für ein besonders schnelles Einspannen von Werkstücken unterschiedlicher Größe ist es zudem bekannt, an einem Schraubstock einen Schnellverstell-Mechanismus vorzusehen, mittels dem wenigstens eine der Spannbacken schneller verstellt bzw. bewegt werden kann, als es bei einer herkömmlichen Betätigung des Schraubstocks möglich ist.

Aus der DE 35 25 196 A1 ist beispielsweise ein Schraubstock mit einer Schnellverstellung bekannt, bei dem in einem Lagerbock zwei Gewindeklötze geführt sind, von denen jeder ein Teilgegengewinde zum Eingriff in das Gewinde einer Spindel aufweist. Zudem sind hier sich an den Gewindeklötzen abstützende Druckfedern und Stifte zur Sicherung des Eingriffs der Teilgegengewinde mit dem Gewinde der Spindel vorgesehen. Jeder Stift weist eine Ringnut und eine durchgehende Mantelfläche auf und ist verschiebbar in dem Lagerbock gelagert. Sofern Raststege der Gewindeklötze dabei an den durchgehenden Mantelflächen der Stifte angreifen, werden die Gewindeklotze gegen die Spindel gepresst, so dass die Gewindeklötze mit ihren Teilgegengewinden in Eingriff mit dem Gewinde der Spindel sind und eine Drehbetätigung der Spindel eine Verringerung des Abstands der Spannbacken bewirkt. Sofern die Raststege in die Ringnuten der Stifte eingreifen, werden die Gewindeklötze mittels der Druckfedern weg von der Spindel verlagert, so dass die Gewindeklötze mit ihren Teilgegengewinden außer Eingriff mit dem Gewinde der Spindel sind und eine Schnellverstellung der Spindel bzw. der mit der Spindel verbundenen Spannbacke möglich wird.

Aus der US 2 708 854 A ist eine Spannvorrichtung gemäß dem Oberbegriff des Anspruchs 1 bekannt.

Aufgabe der Erfindung ist es, eine Spannvorrichtung zum Einspannen wenigstens eines Gegenstands bereitzustellen, mittels der der Gegenstand auf besonders einfache und effektive Weise mit hoher Spannkraft eingespannt werden kann.

Diese Aufgabe wird durch die Merkmale der unabhängigen Ansprüche gelöst. Bevorzugte Weiterbildungen sind in den Unteransprüchen offenbart.

Gemäß Patentanspruch 1 wird eine Spannvorrichtung zum Einspannen wenigstens eines Gegenstands vorgeschlagen, mit einem Spindelkörper und einem mit dem Spindelkörper verschraubbaren Mutterelement, wobei durch Schraubbetätigung des Spindelkörpers und/oder des Mutterelements ein Abstand zwischen einem ersten und einem zweiten Spannelement der Spannvorrichtung verringert und somit ein, insbesondere zwischen den Spannelementen angeordneter, Gegenstand mittels der Spannelemente eingespannt werden kann. Erfindungsgemäß weist das Mutterelement mehrere, insbesondere zylinderförmige, Rollenkörper mit einer definierten Rollen-Eingriffsstruktur auf, wobei die Rollenkörper axial drehbar an einem, insbesondere hülsenförmigen, Aufnahmekörper des Mutterelements gehaltert sowie in Umfangsrichtung verteilt an dem Mutterelement angeordnet sind. Zudem sind an dem Spindelkörper mehrere, insbesondere in Umfangsrichtung verteilte und/oder voneinander beabstandete, Eingriffsbereiche mit jeweils einer Spindelkörper-Eingriffsstruktur ausgebildet, wobei die Rollen mit ihrer Rollen-Eingriffsstruktur in Eingriff mit den Spindelkörper-Eingriffsstrukturen des Spindelkörpers sind oder bringbar sind. Weiter kann das Mutterelement mittels der miteinander in Eingriff bzw. in Gewindeeingriff befindlichen Eingriffsstrukturen des Spindelkörpers und der Rollenkörper, insbesondere unter Abrollen der Rollenkörper auf dem Spindelkörper, mit dem Spindelkörper verschraubt werden.

Auf diese Weise kann ein Gegenstand einfach und effektiv mit hoher Spannkraft eingespannt werden, da es durch die axial drehbar gehalterten Rollenkörper in Verbindung mit den Eingriffsbereichen des Spindelkörpers möglich wird, den Spindelkörper und das den Spindelkörper ringförmig umgreifende Mutterelement ohne Gewindeeingriff relativ zueinander zu verlagern bzw. zu verschieben. So kann beispielsweise bei einer Schraubverbindung mehrerer Bauteile das Mutterelement ohne Gewindeeingriff auf den Spindelkörper aufgesetzt und relativ zu dem Spindelkörper verschoben werden, bis es sich in der Nähe der einzuspannenden Bauteile befindet. Anschließend können das Mutterelement und der Spindelkörper dann in Gewindeeingriff gebracht und durch weitere Drehbetätigung des Mutterelements relativ zu dem Spindelkörper die Bauteile eingespannt werden. Analog kann beispielsweise auch bei einem Schraubstock der Spindelkörper außer Gewindeeingriff mit dem Mutterelement gebracht und relativ zu dem Mutterelement verlagert werden, bis sich die bewegliche Spannbacke in der Nähe eines einzuspannenden Werkstücks befindet. Dadurch wird eine besonders einfache und schnelle Einspannung wenigstens eines Gegenstands ermöglicht.

Des Weiteren ist das Mutterelement bei dem erfindungsgemäßen Aufbau auch nicht entlang seines gesamten Umfangs in Gewindeeingriff mit dem Spindelkörper, sondern lediglich mit den axial drehbar gehalterten Rollenkörpern. So werden die bei einem Verschrauben des Mutterelements mit dem Spindelkörper wirkenden Reibkräfte deutlich verringert. Dabei muss auch lediglich Rollreibung und keine Gleitreibung wie bei herkömmlichen Gewinden überwunden werden. Dadurch kann das Schraubgewinde so gestaltet werden, dass die Spannkraft zur Einspannung eines Gegenstands bei gleichbleibendem Kraftaufwand für die Drehbetätigung des Mutterelements bzw. des Spindelkörpers effektiv erhöht wird.

In einer bevorzugten Ausgestaltung der erfindungsgemäßen Spannvorrichtung ist die Spindelkörper-Eingriffsstruktur jedes Spindelkörper-Eingriffsbereichs durch mehrere voneinander beabstandete, umlaufende Rillen gebildet, durch die außenseitig um den Spindelkörper verlaufende Stege ausgebildet sind. Mittels derartiger Spindelkörper-Eingriffsstrukturen kann das Mutterelement einfach und funktionssicher mit dem Spindelkörper verschraubt werden. Bevorzugt ist dabei vorgesehen, dass die Spindelkörper-Stege jedes Eingriffsbereichs zueinander parallel verlaufen.

Vorzugsweise bilden die Rillen jedes Spindelkörper-Eingriffsbereichs ein Spindelkörper-Gewinde aus. Mittels der Spindelkörper-Gewinde kann das Mutterelement auf effektive Weise über die in Eingriff mit den Spindelkörper-Gewinden bringbaren Rollenkörper mit dem Spindelkörper verschraubt werden. Jedes Spindelkörper-Gewinde erstreckt sich dabei, in Umfangsrichtung gesehen, von einem Anfangsbereich bis zu einem Endbereich. Für einen funktionssicheren Aufbau kann die Gewindesteigung jedes Spindelkörper-Gewindes ausgehend von dem Ausgangsbereich hin zu dem Endbereich konstant sein.

Alternativ kann auch vorgesehen sein, dass sich die Gewindesteigung jedes Spindelkörper-Gewindes ausgehend von dem Ausgangsbereich hin zu dem Endbereich ändert, insbesondere verringert. Durch die sich ändernde Gewindesteigung kann die Einspannung eines Gegenstands optimiert werden. Insbesondere eine Verringerung der Gewindesteigung ist dabei vorteilhaft. Dadurch kann das Mutterelement bei einem Verschrauben mit dem Spindelkörper mit den Rollenkörpern zunächst über einen Bereich mit hoher Gewindesteigung geführt werden, so dass mittels des Mutterelements über einen kurzen Schraubweg ein relativ großer Axialweg zurückgelegt wird. In diesem Gewindebereich wird nur eine relativ geringe bzw. noch keine Spannkraft zum Einspannen eines Gegenstands ausgeübt, so dass der Kraftaufwand zur Drehbetätigung des Mutterelements bzw. des Spindelelements trotz der hohen Gewindesteigung gering ist. Anschließend kann das Mutterelement dann mit ihren Rollenkörpern über einen Bereich mit deutlich verringerter Gewindesteigung geführt werden. In diesem Gewindebereich kann dann die maximale Spannkraft zur Einspannung eines Gegenstands ausgeübt werden. Durch die geringe Gewindesteigung kann das Mutterelement dabei weiterhin mit relativ geringem Kraftaufwand mit dem Spindelkörper verschraubt werden.

Besonders bevorzugt ist jedem Spindelkörper-Eingriffsbereich eine in Axialrichtung verlaufende, in Umfangsrichtung an den jeweiligen Spindelkörper-Eingriffsbereich angrenzende, insbesondere zu den Rollenkörpern konturangepasste, Aufnahmenut des Spindelkörpers zugeordnet, wobei die Rollenkörper des Mutterelements in einer definierten Drehposition des Mutterelements relativ zu dem Spindelkörper teilweise in den Aufnahmenuten angeordnet sind. Zudem ist dann vorgesehen, dass bei in den Aufnahmenuten angeordneten Rollenkörpern die Eingriffsstrukturen des Spindelkörpers und der Rollenkörper außer Eingriff sind und das Mutterelement relativ zu dem Spindelkörper in Axialrichtung verschoben werden kann. Mittels derartiger Aufnahmenuten können der Spindelkörper und das den Spindelkörper ringförmig umgreifende Mutterelement einfach und effektiv außer Gewindeeingriff gebracht und relativ zueinander verlagert werden.

In einer alternativen Ausgestaltung kann auch vorgesehen sein, dass jedem Spindelkörper-Eingriffsbereich eine in Umfangsrichtung an den jeweiligen Spindelkörper-Eingriffsbereich angrenzende, insbesondere zylinderförmige und/oder in Axialrichtung verlaufende, Ausnehmung zugeordnet ist. In jeder Ausnehmung ist dann, insbesondere konturangepasst, ein Drehstift axial drehbar gehaltert, wobei jeder Drehstift einen Umfangsabschnitt mit einer zu den Spindelkörper-Eingriffsstrukturen korrespondierenden Drehstift-Eingriffsstruktur aufweist. Zudem bilden in einer definierten Drehposition der Drehstifte relativ zu dem Spindelkörper die Drehstift-Eingriffsstrukturen zusammen mit den Spindelkörper-Eingriffsstrukturen eine vollständig um den Spindelkörper umlaufende Eingriffsstruktur aus. So kann auf effektive Weise eine vollständig um den Spindelkörper umlaufende Eingriffsstruktur realisiert werden.

Bevorzugt ist dabei vorgesehen, dass jeder Drehstift einen Umfangsabschnitt mit einer Ausnehmung und/oder einer Abflachung aufweist, wobei in einer definierten Drehposition der Drehstifte das Mutterelement mit einem Teil der Rollenkörper in den Spindelkörper-Ausnehmungen angeordnet werden kann, dergestalt, dass die Eingriffsstrukturen des Spindelkörpers und der Rollenkörper außer Eingriff sind und das Mutterelement relativ zu dem Spindelkörper in Axialrichtung verschoben werden kann. So können der Spindelkörper und das den Spindelkörper ringförmig umgreifende Mutterelement ebenfalls effektiv außer Gewindeeingriff gebracht und relativ zueinander verlagert werden.

In einer weiteren bevorzugten Ausgestaltung sind die mehreren Spindelkörper-Eingriffsbereiche an einem ersten Spindelabschnitt des Spindelkörpers ausgebildet, wobei sich an den ersten Spindelabschnitt ein zweiter Spindelabschnitt des Spindelkörpers anschließt, an dem eine in Gewindeeingriff mit der Rollen-Eingriffsstruktur der Rollenkörper bringbare, vollständig um den Spindelkörper umlaufende Eingriffsstruktur ausgebildet ist.

Konkret kann die Eingriffsstruktur des zweiten Spindelbereichs durch ein Gewinde mit mindestens einer umlaufenden Gewinde-Rille gebildet sein, wobei durch die Gewinde-Rille mindestens ein außenseitig um den Spindelkörper wendelförmig verlaufender Steg ausgebildet ist. Über ein derartiges, insbesondere als herkömmliches Außengewinde ausgebildetes, Schraubgewinde kann die Spannmutter funktionssicher auf den Basiskörper aufgeschraubt werden. Ein derartiges Außengewinde kann zudem besonders einfach gefertigt werden.

Vorzugsweise ist die Rollen-Eingriffsstruktur jedes Rollenkörpers durch mehrere in Rollen-Axialrichtung voneinander beabstandete umlaufende Rillen gebildet ist, durch die sich in Umfangsrichtung um den jeweiligen Rollenkörper erstreckende ringförmige Stege ausgebildet sind. Mittels einer derartigen Ausgestaltung der Rollen-Eingriffsstrukturen kann das Mutterelement funktionssicher mit dem Spindelkörper verschraubt werden.

Alternativ kann die Rollen-Eingriffsstruktur auch selbst als durchgängiges Gewinde ausgestaltet sein, dessen Steigungsrichtung der Steigungsrichtung der Spindelkörper-Gewinde entspricht. Durch diese Ausgestaltung wird eine größerer axialer Spannweg bei einem Anziehen des Mutterelements bewirkt.

Zweckmäßig kann jeder Rollenkörper stirnseitig abragende Lagerzapfen aufweisen, mittels denen der jeweilige Rollenkörper axial drehbar an dem Aufnahmekörper des Mutterelements gehaltert ist. So können die Rollenkörper zuverlässig und effektiv axial drehbar an dem Mutterelement gehaltert werden. Die Rollenkörper können dabei unmittelbar oder mittelbar bzw. über wenigstens ein Verbindungselement an dem Aufnahmekörper gehaltert sein.

Bevorzugt ist jeder Rollenkörper, insbesondere mittels der Lagerzapfen, in einem ringförmigen, insbesondere kreisringförmigen, Lagerkäfig des Mutterelements axial drehbar gelagert. Über einen derartigen Lagerkäfig können die Rollenkörper auf einfache Weise axial drehbar und mit in Umfangsrichtung definiertem Abstand zueinander an dem Mutterelement bzw. an dem hülsenförmigen Aufnahmekörper des Mutterelements befestigt werden. Bevorzugt ist dabei vorgesehen, dass der ringförmige Lagerkäfig mehrteilig mit mehreren, insbesondere im Querschnitt rechteckförmigen, Ringsegmentelementen ausgebildet ist und zumindest einem Teil der Ringsegmentelemente wenigstens ein Rollenkörper zugeordnet ist. So wird die Montage des Lagerkäfigs an dem Mutterelement deutlich vereinfacht. Besonders bevorzugt ist es dabei, wenn jedem Ringsegmentelement ein einziger Rollenkörper zugeordnet ist.

Zweckmäßig kann das Mutterelement mehrere, insbesondere zwei, in Axialrichtung voneinander beabstandete Lägerkäfige aufweisen, in denen jeweils mehrere Rollenkörper axial drehbar gelagert sind. Mittels der mehreren voneinander beabstandeten Lagerkäfige wird einem ungewünschten "Verkippen" des in Gewindeeingriff mit dem Spindelkörper befindlichen Mutterelements einfach und effektiv entgegengewirkt. Zudem wird es durch einen derartigen Aufbau auch möglich, besonders hohe Axialkräfte zwischen dem Mutterelement und dem Spindelkörper zu übertragen.

Bevorzugt weist der hülsenförmige Aufnahmekörper wenigstens eine Aufnahmekörper-Eingriffsstruktur auf, mit der der Aufnahmekörper in Eingriff mit der Rollen-Eingriffsstruktur der Rollenkörper ist. Auf diese Weise werden eine effektive Übertragung der axialen Spannkraft von den Rollenkörpern auf das Mutterelement und eine effektive Führung der Rollenkörper in Umfangsrichtung realisiert. Zweckmäßig kann die Aufnahmekörper-Eingriffsstruktur durch mehrere voneinander beabstandete, umlaufende Rillen gebildet sein, durch die sich innenseitig in Umfangsrichtung um den Aufnahmekörper erstreckende ringförmige Stege ausgebildet sind. Sofern die Rollenkörper ein Außengewinde aufweisen, ist es hingegen bevorzugt, dass die Aufnahmekörper-Eingriffsstruktur ein zu dem Rollenkörper-Außengewinde korrespondierendes Innengewinde aufweist.

In einer konkreten Ausgestaltung kann der hülsenförmige Aufnahmekörper wenigstens eine innenseitig in Umfangsrichtung verlaufende Ausnehmung bzw. Vertiefung aufweisen, in der der ringförmige Lagerkäfig konturangepasst angeordnet ist. So kann der Lagerkäfig auf einfache und effektive Weise mit dem Aufnahmekörper verbunden werden. Vorzugsweise ist der in der Ausnehmung angeordnete Lagerkäfig dabei relativ zu dem Aufnahmekörper in Umfangsrichtung verdrehbar an dem hülsenförmigen Aufnahmekörper gehaltert. Zweckmäßig kann ein die Ausnehmung bodenseitig begrenzender Wandbereich des hülsenförmigen Aufnahmekörpers die Aufnahmekörper-Eingriffsstruktur ausbilden.

In einer weiteren Ausführungsform können die Abstände der Rillen der Aufnahmekörper-Eingriffsstruktur und/oder der Rollenkörper-Eingriffsstruktur und/oder der Spindelkörper-Eingriffsstruktur derart angepasst werden, dass sich unter Beaufschlagung hoher Axialkräfte und der daraus resultierender Verformungen der Bauteile gleichmäßige Tragbilder zwischen einander zugeordneten Eingriffsstrukturen ergeben. Insbesondere kann der Abstand der Rillen in der Aufnahmekörper-Eingriffsstruktur und/oder der Abstand der Rillen in der Spindelkörper-Eingriffsstruktur kleiner gewählt werden als der Abstand der Rillen der Rollenkörper-Eingriffsstrukturen.

Zweckmäßig können sich die Spindelkörper-Eingriffsstrukturen über eine axiale Länge des Spindelkörpers erstrecken, die um ein Vielfaches größer ist, insbesondere mehr als fünfmal so groß ist, als die axiale Länge der Rollenkörper.

In einer bevorzugten konkreten Ausgestaltung ist vorgesehen, dass der Spindelköper einen Schraubenkopf aufweist, wobei das Mutterelement das erste Spannelement und der Schraubenkopf das zweite Spannelement ausbildet. Dabei kann das, insbesondere ein Antriebsprofil aufweisende, Mutterelement durch Drehbetätigung in einer ersten Drehrichtung relativ zu dem Spindelkörper mittels der miteinander in Eingriff befindlichen Eingriffsstrukturen in Spindel-Axialrichtung hin zu dem Schraubenkopf verlagert und somit wenigstens ein Gegenstand eingespannt werden. Zudem kann das Mutterelement durch Drehbetätigung in einer zu der ersten Drehrichtung entgegengesetzten zweiten Drehrichtung relativ zu dem Spindelkörper mittels der miteinander in Eingriff befindlichen Eingriffsstrukturen in Spindel-Axialrichtung weg von dem Schraubenkopf verlagert werden. Mittels einer derartigen Spannvorrichtung kann eine effektive Schraubverbindung mehrerer Bauteile als einzuspannende Gegenstände realisiert werden.

Alternativ kann aber auch vorgesehen sein, dass der Spindelkörper axial drehbar an einem, insbesondere linear verlagerbar festgelegten, ersten Spannbackenelement mit einer ersten Spannbacke gehaltert ist, wobei das Mutterelement drehfest an einem, insbesondere ortsfest festgelegten, zweiten Spannbackenelement mit einer zweiten Spannbacke gehaltert ist, wobei die erste Spannbacke das erste Spannelement und die zweite Spannbacke das zweite Spannelement ausbildet. Die erste Spannbacke kann dann durch Drehbetätigung des Spindelkörpers in einer ersten Drehrichtung relativ zu dem Mutterelement mittels der miteinander in Eingriff befindlichen Eingriffsstrukturen hin zu der zweiten Spannbacke verlagert und somit ein Gegenstand eingespannt werden. Weiter kann die erste Spannbacke durch Drehbetätigung des Spindelkörpers in einer zu der ersten Drehrichtung entgegengesetzten zweiten Drehrichtung relativ zu dem Mutterelement mittels der miteinander in Eingriff befindlichen Eingriffsstrukturen weg von der zweiten Spannbacke verlagert werden. So kann eine effektive Einspannung eines zu bearbeitenden Werkstücks als einzuspannender Gegenstand realisiert werden.

Ferner wird auch eine Vorrichtung mit der erfindungsgemäßen Spannvorrichtung beansprucht, mit mehreren Bauteilen, die mittels der Spannvorrichtung miteinander verbunden sind, wobei jedes Bauteil eine durchgängige Ausnehmung aufweist, durch die der Spindelkörper, insbesondere mit einem definierten Spaltabstand, geführt ist, und wobei die Bauteile zwischen der Schraubmutter und dem Schraubenkopf des Spindelkörpers eingespannt sind. Auf diese Weise wird eine effektive Schraubverbindung mehrerer Bauteile realisiert.

Des Weiteren wird auch ein Schraubstock mit der erfindungsgemäßen Spannvorrichtung beansprucht.

Die sich durch die erfindungsgemäße Vorrichtung und den erfindungsgemäßen Schraubstock ergebenden Vorteile sind identisch mit den bereits gewürdigten Vorteilen der erfindungsgemäßen Spannvorrichtung, so dass diese an dieser Stelle nicht wiederholt werden. Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert wird/werden (gleiche Bauteile/Komponenten und Funktionen weisen in den Zeichnungen/Figuren gleiche Bezugszeichen auf).

Es zeigen:
- Fig. 1: in einer Perspektivdarstellung ein erstes Ausführungsbeispiel einer erfindungsgemäßen Spannvorrichtung;
- Fig. 2: eine Schnittdarrstellung entlang der Schnittebene A-A aus Fig. 1;
- Fig. 3: eine Schnittdarrstellung entlang der Schnittebene B-B aus Fig. 2;
- Fig. 4: in einer Darstellung von oben einen Spindelkörper der Spannvorrichtung;
- Fig. 5: in einer Perspektivdarstellung ein Ringsegmentelement der Spannvorrichtung;
- Fig. 6: in einer Perspektivdarstellung einen Rollenkörper der Spannvorrichtung;
- Fig. 7: in einer Darstellung gemäß Fig. 4 ein zweites Ausführungsbeispiel einer erfindungsgemäßen Spannvorrichtung;
- Fig. 8: in einer Darstellung gemäß Fig. 1 ein drittes Ausführungsbeispiel einer erfindungsgemäßen Spannvorrichtung;
- Fig. 9: eine Schnittdarrstellung entlang der Schnittebene C-C aus Fig. 8;
- Fig. 10: in einer Perspektivdarstellung einen Spindelkörper der Spannvorrichtung;
- Fig. 11: in einer Perspektivdarstellung den Spindelkörper;
- Fig. 12: in einer Perspektivdarstellung einen Teil des Spindelkörpers;
- Fig. 13: in einer Perspektivdarstellung einen Drehstift des Spindelkörpers;
- Fig. 14: in einer Perspektivdarstellung einen Spindelkörper eines vierten Ausführungsbeispiels einer erfindungsgemäßen Spannvorrichtung;
- Fig. 15: in einer Perspektivdarstellung einen Schaft des Spindelkörpers; und
- Fig. 16: in einer Seitenansicht ein drittes Ausführungsbeispiel einer erfindungsgemäßen Spannvorrichtung.

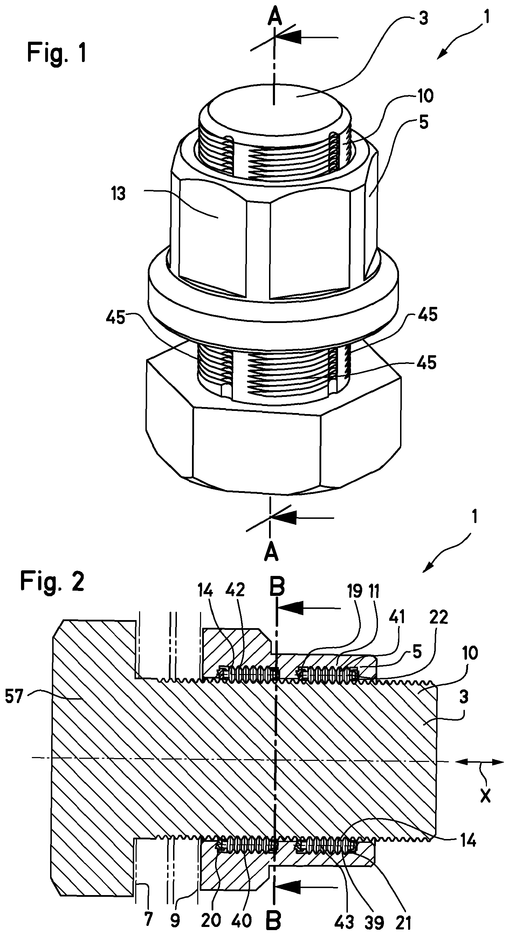

In Fig. 1 ist ein erstes Ausführungsbeispiel einer erfindungsgemäßen Spannvorrichtung 1 gezeigt. Die Spannvorrichtung 1 weist einen Spindelkörper 3 und ein mit dem Spindelkörper 3 verschraubbares bzw. in Gewindeeingriff mit dem Spindelkörper 3 bringbares Mutterelement 5 auf. Die Spannvorrichtung 1 ist hier als Verbindungsvorrichtung ausgebildet, mittels der mehrere Bauteile mit einer Schraubverbindung verbunden werden können. Zur Verdeutlichung einer derartigen Verbindung sind in Fig. 2 beispielhaft zwei mittels der Spannvorrichtung 1 verbundene Bauteile 7, 9 mit gestrichelten Linien angedeutet. Jedes Bauteil 7, 9 weist eine durchgängige Ausnehmung bzw. Bohrung auf, durch die der Spindelkörper 3 mit einem im Wesentlichen zylinderförmigen Schaft bzw. Spindelbereich 10 geführt ist. Zudem sind die Bauteile zwischen dem Mutterelement 5 und einem mit dem Schaft 10 verbundenen Schraubenkopf 57 des Spindelkörpers 3 eingespannt.

Wie in Fig. 2 weiter gezeigt ist, weist das Mutterelement 5 einen hülsenförmigen Aufnahmekörper bzw. Basiskörper 11 auf, mit dem das Mutterelement 5 auf den Schaft 10 aufgeschoben bzw. aufgeschraubt werden kann. Im aufgeschobenen Zustand des Mutterelements 5 umgreift der hülsenförmige Aufnahmekörper den Schaft 10 ringförmig. Der hülsenförmige Aufnahmekörper 11 weist ein Antriebsprofil 13 (Fig. 1) zur Drehbetätigung des Mutterelements 5 auf. Das Antriebsprofil 13 ist hier beispielhaft durch einen Außensechskant gebildet.

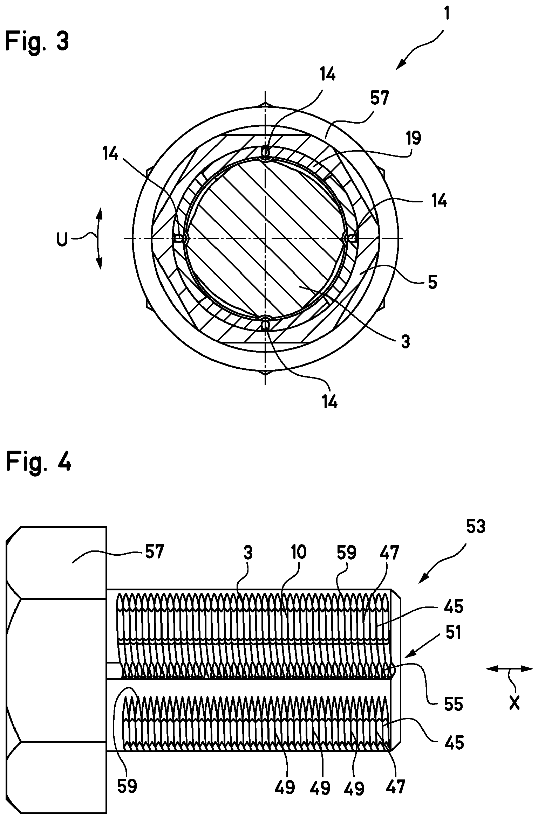

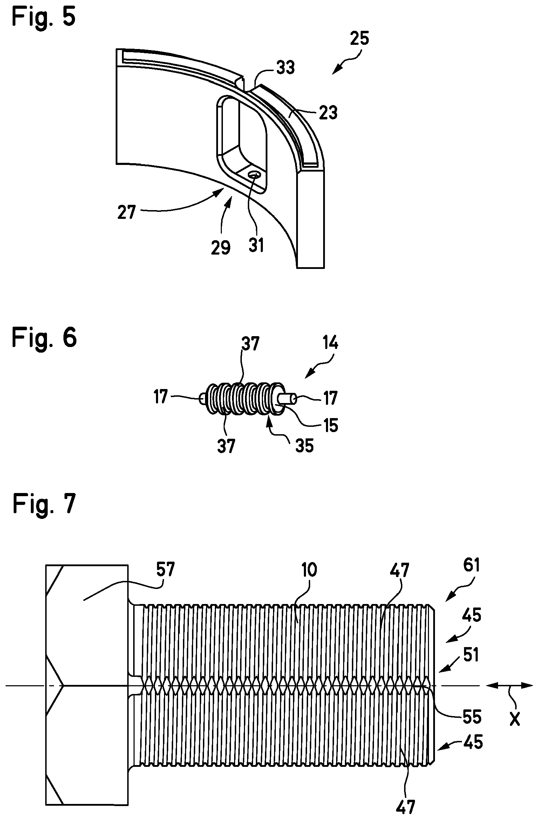

Gemäß Fig. 2 und 3 weist das Mutterelement 5 zudem mehrere, hier beispielhaft acht, zylinderförmige Rollenkörper 14 auf. Jeder Rollenkörper 14 weist hier gemäß Fig. 6 stirnseitig bzw. von den Stirnwänden 15 abragende zylinderförmige Lagerzapfen 17 auf, mittels denen die Rollenkörper 14 axial drehbar in ringförmigen Lagerkäfigen 19, 20 des Mutterelements 5 gelagert sind. In jedem Lagerkäfig 19, 20 sind hier beispielhaft vier Rollenkörper 14 axial drehbar gelagert. Die an dem jeweiligen Lagerkäfig 19, 20 gelagerten Rollenkörper 14 sind in Umfangsrichtung U gleichmäßig verteilt an dem Mutterelement 5 angeordnet. Jeder ringförmige Lagerkäfig 19 ist konturangepasst in einer innenseitig in Umfangsrichtung U verlaufenden Ausnehmung 21, 22 (Fig. 2) des hülsenförmigen Aufnahmekörpers 11 angeordnet. Dabei ist jeder Lagerkäfig 19, 20 mit seitlich nach außen abragenden, länglichen Hintergriffsstegen 23 in der jeweiligen Ausnehmung 21, 22 gehaltert, dergestalt, dass der jeweilige Lagerkäfig 19, 20 relativ zu dem hülsenförmigen Aufnahmekörper 11 in Umfangsrichtung U verdreht werden kann. Zudem sind die Lagerkäfige 19, 20 hier mit einem definierten Axialabstand voneinander beabstandet.

Des Weiteren ist jeder ringförmige Lagerkäfig 19, 20 hier mehrteilig mit mehreren, hier beispielhaft vier, im Querschnitt rechteckförmigen Ringsegmentelementen 25 (Fig. 5) ausgebildet. Jedem Ringsegmentelement 25 ist hier beispielhaft ein einziger Rollenkörper 14 zugeordnet. Dabei ist jeder Rollenkörper 14 konturangepasst in einer durchgängigen Ausnehmung 27 an einem, in Umfangsrichtung U gesehen, mittleren Bereich 29 des jeweiligen Ringsegmentelements 25 angeordnet. Zudem weist jedes Ringsegmentelement 25 an dem mittleren Bereich 29 Zapfenaufnahmen 31, 33 auf, in denen die Lagerzapfen 17 der Rollenkörper 14 aufgenommen sind. Die Zapfenaufnahme 31 des jeweiligen Ringsegmentelements 25 ist dabei durch eine geschlossene Bohrung gebildet, während die Zapfenaufnahme 33 des jeweiligen Ringsegmentelements 25 durch einen nach außen offenen Schlitz gebildet ist. Bei der Montage des Mutterelements 5 werden die Rollenkörper 14 dabei zunächst mit einem der Lagerzapfen 17 in die Bohrung 31 und anschließend mit dem anderen der Lagerzapfen 17 in den Schlitz 33 geführt. Weiter sind hier auch an jedem Ringsegmentelement 25 die seitlich nach außen abragenden Hintergriffsstege 23 ausgebildet.

Gemäß Fig. 6 weist jeder Rollenkörper 14 zudem eine definierte Rollen-Eingriffsstruktur 35 auf. Die Rollen-Eingriffsstruktur 35 jedes Rollenkörpers 14 ist hier durch mehrere in Rollen-Axialrichtung voneinander beabstandete Rillen gebildet, durch die sich in Umfangsrichtung um den jeweiligen Rollenkörper 14 erstreckende ringförmige Stege 37 ausgebildet sind. Zudem ist die Längsachse der Rollenkörper 14 hier parallel zur Längsachse des Mutterelements 5 angeordnet. Alternativ könnte die Längsachse der Rollenkörper 14 aber auch mit einem definierten Anstellwinkel zur Längsachse des Mutterelements 5 ausgerichtet sein.

Die Rollenkörper 14 sind mit ihrer Rollen-Eingriffsstruktur 35 in Eingriff mit Aufnahmekörper-Eingriffsstrukturen 39, 40 (Fig. 2) des Aufnahmekörpers 11, die an, die umlaufenden Ausnehmungen 21, 22 bodenseitig begrenzenden Wandbereichen 41, 42 des Aufnahmekörpers 11 ausgebildet. Jede Aufnahmekörper-Eingriffsstruktur 39, 40 des Aufnahmekörpers 11 ist durch mehrere in Axialrichtung x voneinander beabstandete Rillen gebildet, durch die sich in Umfangsrichtung U um den Aufnahmekörper 11 erstreckende ringförmige Stege 43 ausgebildet sind. Die Aufnahmekörper-Eingriffsstrukturen 39, 40 bilden dabei eine Führung für die Rollenkörper 14 in Umfangsrichtung U.

Des Weiteren weist der Schaft 10 des Spindelkörpers 3 mehrere, hier beispielhaft vier, in Umfangsrichtung U gleichmäßig verteilte, voneinander beabstandete Eingriffsbereiche 45 (Fig. 1, 4) mit jeweils einer zu der Rollen-Eingriffsstruktur 35 korrespondierenden Spindelkörper-Eingriffsstruktur 47 auf. Mittels der Rollen-Eingriffsstrukturen 35 der Rollenkörper 14 und der Spindelkörper-Eingriffsstrukturen 47 des Spindelkörpers 3 kann das Mutterelement 5 mit dem Spindelkörper 3 verschraubt bzw. in Gewindeeingriff gebracht werden. Im verschraubten Zustand von Spindelkörper 3 und Mutterelement 5 ist jeder Rollenkörper 14 mit seiner Rollen-Eingriffsstruktur 35 in Eingriff mit der Spindelkörper-Eingriffsstruktur 47 eines Eingriffsbereichs 45.

Die Spindelkörper-Eingriffsstruktur 47 jedes Eingriffsbereichs 45 ist dabei durch mehrere voneinander beabstandete, umlaufende Rillen gebildet, durch die außenseitig um den Spindelkörper 3 verlaufende Stege 49 ausgebildet sind. Die Spindelkörper-Stege 49 jedes Eingriffsbereichs 45 verlaufen dabei zueinander parallel. Die Rillen jedes Spindelkörper-Eingriffsbereichs 45 bilden zudem ein Spindelkörper-Gewinde aus. Dabei erstreckt sich jedes Spindelkörper-Gewinde 47, in Umfangsrichtung U gesehen, von einem Anfangsbereich 51 bis zu einem Endbereich 53, wobei die Gewindesteigung jedes Spindelkörper-Gewindes 45 ausgehend von dem Ausgangsbereich 51 hin zu dem Endbereich 53 konstant ist. Alternativ könnte aber auch vorgesehen sein, dass sich die Gewindesteigung jedes Spindelkörper-Gewindes 45 ausgehend von dem Anfangsbereich 51 hin zu dem Endbereich 53 ändert, insbesondere verringert. Die Spindelkörper-Eingriffsstrukturen 47 erstrecken sich hier zudem über eine axiale Länge des Spindelkörpers 3, die um ein Vielfaches größer ist als die axiale Länge der Rollenkörper 14.

Des Weiteren ist hier jedem Spindelkörper-Eingriffsbereich 45 eine in Axialrichtung x verlaufende, in Umfangsrichtung U an den jeweiligen Spindelkörper-Eingriffsbereich 45 angrenzende, hier beispielhaft zu den Rollenkörpern 14 konturangepasste Aufnahmenut 55 des Spindelkörpers 3 zugeordnet. Über die Aufnahmenuten 55 kann das Mutterelement 5 auf den Schraubabschnitt 44 aufgesetzt und von dem Schraubabschnitt 44 abgenommen werden. Zum Aufsetzen des Mutterelements 5 auf den Schraubabschnitt 44 wird in jede Aufnahmenut 55 ein Rollenkörper 14 teilweise bzw. mit einen von dem Aufnahmekörper 11 nach innen abragenden Bereich eingeführt. Die in die Aufnahmenuten 55 eingeführte Rollenkörper 14 sind mit ihren Eingriffsstrukturen 35 nicht in Eingriff mit den Eingriffsstrukturen 47 des Schraubabschnitts 44, so dass das Mutterelement 5 relativ zu dem Spindelkörper 3 in Axialrichtung x verlagert werden kann. Die Aufnahmenuten 55 erstrecken sich dabei in Axialrichtung x über die gesamte axiale Länge der Spindelkörper-Eingriffsstrukturen 47.

Zum Verschrauben des Mutterelements 5 mit dem Spindelkörper 3 wird das auf den Schraubabschnitt 44 aufgesetzte Mutterelement 5 in einer ersten Drehrichtung relativ zu dem Spindelkörper 3 drehbetätigt. Dabei werden die Rollenkörper 14 ausgehend von der jeweiligen Aufnahmenut 55 in den an die jeweilige Aufnahmenut 55 in Umfangsrichtung U angrenzenden Spindelkörper-Eingriffsbereich 45 bzw. Anfangsbereich 51 der Spindelkörper-Eingriffsstruktur 47 eingeführt. Bei weiterer Drehbetätigung des Mutterelements 5 wird das Mutterelement 5 mittels der miteinander in Eingriff befindlichen Eingriffsstrukturen 35, 47 in Spindel-Axialrichtung x hin zu dem Schraubenkopf 57 des Spindelkörpers verlagert. Auf diese Weise können zwischen dem Schraubenkopf 57 und dem Mutterelement 5 angeordnete Bauteile eingespannt und somit verbunden werden.

Zum Lösen der Verschraubung von Mutterelement 5 und Spindelkörper 3 wird das Mutterelement 5 in einer zu der ersten Drehrichtung entgegengesetzten zweiten Drehrichtung drehbetätigt. Dabei wird das Mutterelement 5 mittels der miteinander in Eingriff befindlichen Eingriffsstrukturen 35, 47 in Spindel-Axialrichtung x weg von dem Schraubenkopf 57 des Spindelkörpers verlagert. Zudem werden die Rollenkörper 14 ausgehend von dem jeweiligen Spindelkörper-Eingriffsbereich 45 in die angrenzenden Aufnahmenuten 55 eingeführt. In einer definierten Drehposition des Mutterelements 5 sind die Rollenkörper 14 dann in den Aufnahmenuten 55 angeordnet, so dass die Eingriffsstrukturen 47, 35 des Spindelkörpers 3 und der Rollenkörper 14 außer Eingriff sind und das Mutterelement 5 relativ zu dem Spindelkörper 3 in Axialrichtung verschoben werden kann. In dieser Drehposition des Mutterelements 5 kann das Mutterelement 5 auch von dem Spindelkörper 3 abgenommen werden.

Des Weiteren weist der Spindelkörper 3 hier auch Endanschläge 59 (Fig. 4) auf, mit denen das Mutterelement 5 bei einem Verschrauben mit dem Spindelkörper 3 in Anlage kommt. Diese Endanschläge 59 sind hier beispielhaft durch, die Spindelkörper-Eingriffsstrukturen 47 in Umfangsrichtung U begrenzende Wandbereiche des Spindelkörpers 3 gebildet. Mit diesen, an den Endbereichen 53 der Eingriffsstrukturen 47 angeordneten Wandbereichen kommen die Rollenkörper 14 bei einer Drehbetätigung des Mutterelements 5 in der ersten Drehrichtung in Anlage.

Optional kann das Mutterelement 5 an einer dem Schraubenkopf 57 zugewandten Stirnseite auch ein Axiallager, beispielsweise ein Axial-Zylinderrollenlager, aufweisen, mit dem das Mutterelement 5 bei einem Einspannen von Bauteilen in Anlage mit einem Bauteil kommt. Auf diese Weise können die bei einem Aufschrauben des Mutterelements 5 wirkenden Reibkräfte zwischen dem Bauteil und dem Mutterelement 5 effektiv verringert werden.

In Fig. 7 ist ein zweites Ausführungsbeispiel einer erfindungsgemäßen Spannvorrichtung gezeigt. Diese Spannvorrichtung weist einen Spindelkörper 61 auf. Im Vergleich zu dem Spindelkörper 3 weist der Spindelkörper 61 keine Endanschläge 59 auf. Anstelle dessen grenzt jede Spindelkörper-Eingriffsstruktur 47 hier mit ihrem Endbereich 53 an die in Umfangsrichtung U folgende Aufnahmenut 55 an. Somit können die Rollenkörper 14 hier auch bei einer Drehbetätigung des Mutterelements 5 in der ersten Drehrichtung ausgehend von der jeweiligen Spindelkörper-Eingriffsstruktur 47 in die in Umfangsrichtung U folgende Aufnahmenut 55 eingeführt werden.

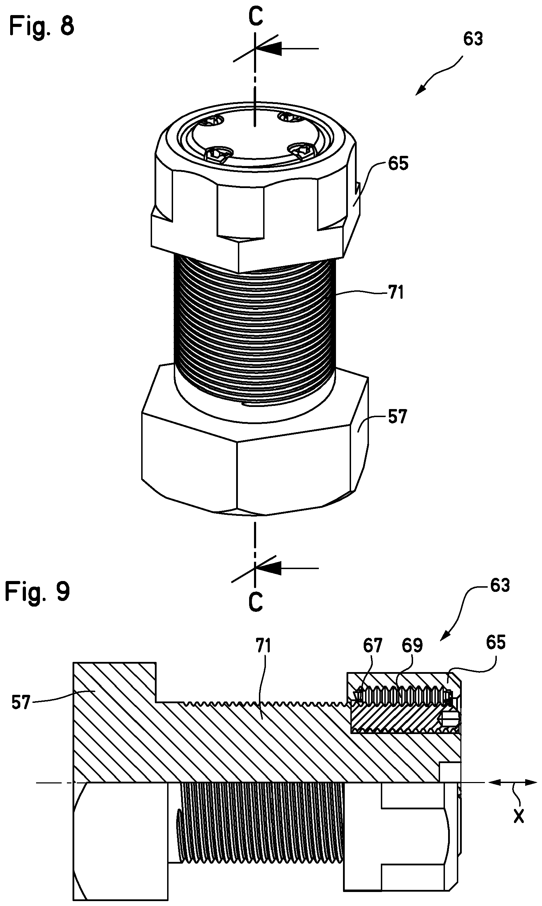

In den Fig. 8 bis 13 ist ein drittes Ausführungsbeispiel einer erfindungsgemäßen Spannvorrichtung 63 gezeigt. Diese Spannvorrichtung 63 weist ein Mutterelement 65 auf. Im Vergleich zu dem Mutterelement 5 der Spannvorrichtung 1 weist das Mutterelement 65 eine geringere axiale Länge auf. Zudem weist das Mutterelement 65 nicht zwei Lagerkäfige, sondern einen einzigen Lagerkäfig 67 auf, in dem mehrere, hier beispielhaft vier, Rollenkörper 69 axial drehbar gelagert sind. Die Rollenkörper 69 weisen zudem eine größere axiale Länge als die Rollenkörper 14 auf.

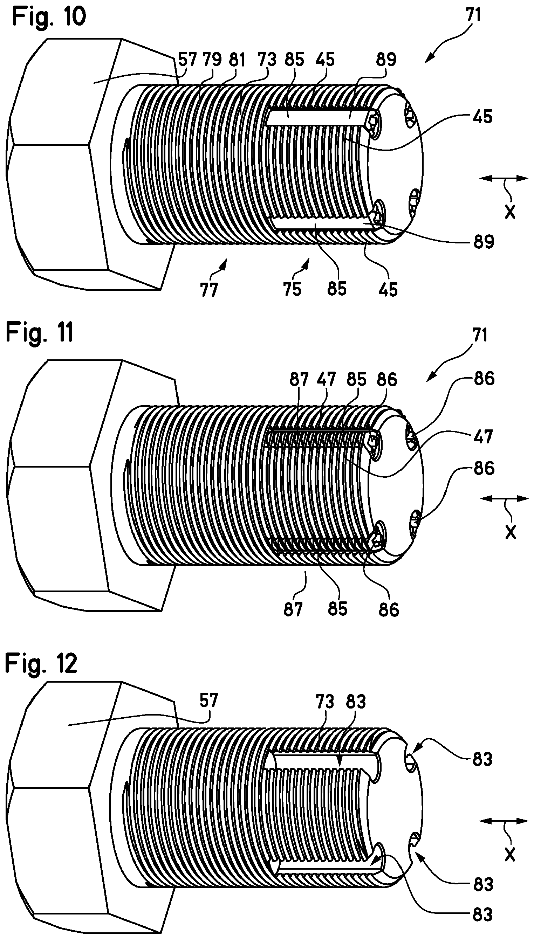

Des Weiteren weist die Spannvorrichtung 63 auch einen Spindelkörper 71 auf. Gemäß Fig. 10 weist ein im wesentlichen zylinderförmiger Schaft 73 des Spindelkörpers 71 einen ersten Spindelabschnitt 75 auf, an dem die mehreren Spindelkörper-Eingriffsbereiche 45 ausgebildet sind. Der erste Spindelabschnitt 75 bildet dabei ein freies Ende des Schafts 73 aus. Zudem weisen die Spindelkörper-Eingriffsbereiche 45 hier eine deutlich geringere axiale Länge als bei der Spannvorrichtung 1 auf.

Weiter weist der Schaft 73 des Spindelkörpers 71 auch einen sich an den ersten Spindelabschnitt 75 anschließenden zweiten Spindelabschnitt 77 auf, an dem eine in Eingriff mit der Rollen-Eingriffsstruktur 35 der Rollenkörper 14 bringbare, vollständig außenseitig um den Spindelkörper 71 umlaufende Eingriffsstruktur 79 ausgebildet ist. Der Spindelabschnitt 77 ist in Axialrichtung x zwischen dem ersten Spindelabschnitt 75 und dem Schraubenkopf 57 des Spindelkörpers 71 angeordnet. Zudem ist die Eingriffsstruktur 79 des zweiten Spindelabschnitts 77 hier durch ein Gewinde mit einer umlaufenden Gewinde-Rille gebildet, wobei durch die Gewinde-Rille ein außenseitig um den Spindelkörper 71 wendelförmig verlaufender Steg 81 ausgebildet ist.

Gemäß den Figuren 10 bis 12 weist der Spindelkörper 71 zudem keine Aufnahmenuten 55 auf. Anstelle dessen ist jedem Spindelkörper-Eingriffsbereich 45 des Spindelkörpers 71 eine in Umfangsrichtung U an den jeweiligen Spindelkörper-Eingriffsbereich 45 angrenzende, zylinderförmige Ausnehmung 83 zugeordnet. Die zylinderförmigen Ausnehmungen 83 verlaufen dabei in Axialrichtung x. In jeder Ausnehmung 83 ist ein im Wesentlichen zylinderförmiger Drehstift 85 axial drehbar gehaltert, wobei jeder Drehstift 85 um mehr als die Hälfte seines Umfangs von dem Material des Schafts 73 umgriffen wird. Stirnseitig weist jeder Drehstift 85 hier zudem ein Antriebsprofil 86 zur Drehbetätigung des Drehstifts 85 auf. Das Antriebsprofil ist hier beispielhaft durch einen Innensechskant gebildet.

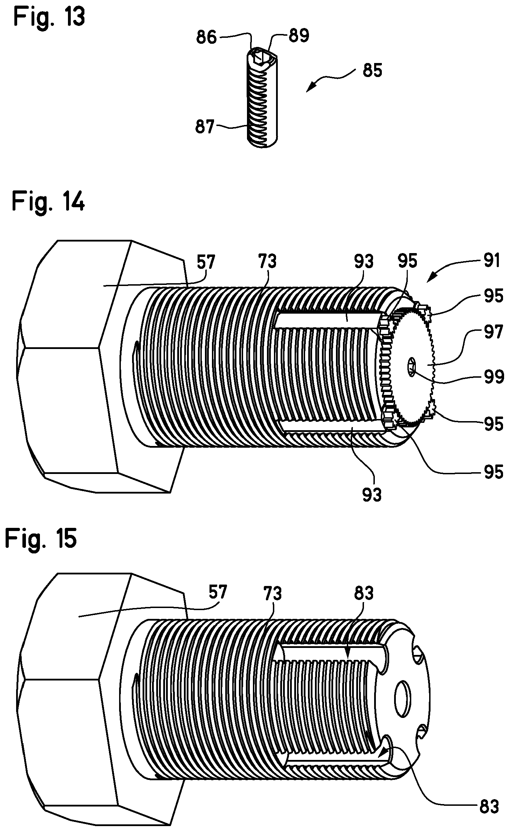

Jeder Drehstift 85 weist einen Umfangsabschnitt 87 (Fig. 13) mit einer zu den Spindelkörper-Eingriffsstrukturen 47 korrespondierenden Drehstift-Eingriffsstruktur auf. In der, in Fig. 11 gezeigten Drehposition der Drehstifte 85 relativ zu dem Schaft 73 ist der Umfangsabschnitt 87 nach außen freigelegt. Dabei bilden die Drehstift-Eingriffsstrukturen 87 zusammen mit den Spindelkörper-Eingriffsstrukturen 47 eine vollständig bzw. nur mit kleinen Unterbrechungen außenseitig um den Spindelkörper 71 umlaufende Eingriffsstruktur in Gestalt eines mehrgängigen Gewindes aus.

Gemäß Fig. 10 weist jeder Drehstift 85 zudem einen Umfangsabschnitt 89 mit einer Abflachung auf. In einer, in Fig. 10 gezeigten Drehposition der Drehstifte 85 ist der Umfangsabschnitt 89 nach außen freigelegt. In dieser Drehposition der Drehstifte 85 kann das Mutterelement 65 in einer definierten Drehposition angeordnet werden, in der die Rollenkörper 69 teilweise in den Spindelkörper-Ausnehmungen 83 angeordnet sind. Die Eingriffsstrukturen 35, 47 des Spindelkörpers 71 und der Rollenkörper 69 sind hier dann außer Eingriff. Zudem greifen die Rollenkörper 69 mit ihren Eingriffsstrukturen 35 hier dann auch nicht in die Drehstifte 85 ein. Somit kann das Mutterelement 65 hier dann relativ zu dem Spindelkörper 71 in Axialrichtung x verschoben werden, insbesondere auch von dem Spindelkörper 71 abgenommen und auf den Spindelkörper 71 aufgesetzt werden. Alternativ zu der Abflachung 89 kann der jeweilige Drehstift 85 auch eine, insbesondere zylinderförmige, Ausnehmung aufweisen.

In den Fig. 14 und 15 ist ein viertes Ausführungsbeispiel einer erfindungsgemäßen Spannvorrichtung gezeigt. Diese Spannvorrichtung weist einen Spindelkörper 91 auf. Im Vergleich zu dem Spindelkörper 71 weist der Spindelkörper 91 Drehstifte 93 auf. Jeder Drehstift 93 weist für einen Drehantrieb an einem freien Ende ein Stirnrad 95 auf. Die Stirnräder 95 sind in Zahneingriff mit einem zentral angeordneten, axial drehbar an dem Schaft 73 gehalterten Stirnrad 97 des Spindelkörpers 71. Das Stirnrad 97 weist für einen Drehantrieb an einem zentralen Bereich ein Antriebsprofil 99 auf. Das Antriebsprofil 99 ist hier beispielhaft ebenfalls durch einen Innensechskant gebildet.

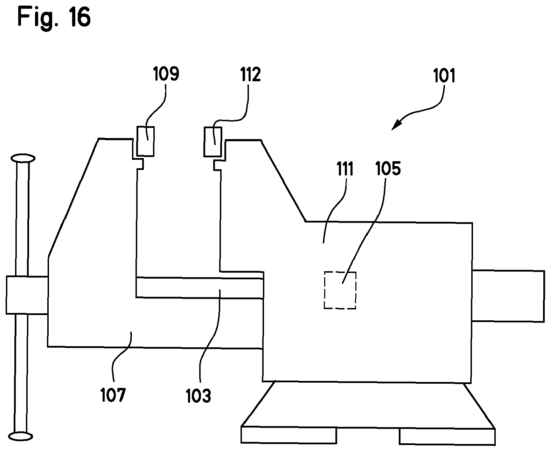

In Fig. 16 ist ein Schraubstock 101 mit einem fünften Ausführungsbeispiel einer erfindungsgemäßen Spannvorrichtung gezeigt. Der Schraubstock 101 weist einen Spindelkörper 103 und ein mit dem Spindelkörper 103 verschraubbares, mit gestrichelten Linien angedeutetes Mutterelement 105 auf. Der grundsätzliche Aufbau des Spindelkörpers 103 entspricht dem Aufbau des Spindelkörpers 3, wobei der Spindelkörper 103 jedoch insbesondere keinen Schraubenkopf aufweist. Ebenso entspricht der grundsätzliche Aufbau des Mutterelements 105 dem Aufbau des Mutterelements 5.

Der Spindelkörper 103 ist hier axial drehbar an einem ersten Spannbackenelement 107 des Schraubstocks 101 mit einer ersten Spannbacke 109 gehaltert. Zudem ist das Mutterelement 105 drehfest an einem zweiten Spannbackenelement 111 des Schraubstocks 101 mit einer zweiten Spannbacke 112 gehaltert.

Die erste Spannbacke 109 kann dabei durch Drehbetätigung des Spindelkörpers 103 in einer ersten Drehrichtung relativ zu dem Mutterelement 105 mittels der miteinander in Eingriff befindlichen Eingriffsstrukturen des Spindelkörpers 103 und der Rollenkörper des Mutterelements 105 hin zu der zweiten Spannbacke 112 verlagert werden. Auf diese Weise kann ein zwischen den Spannbacken 109, 112 angeordnetes Werkstück eingespannt werden.

Durch Drehbetätigung des Spindelkörpers 103 in einer zu der ersten Drehrichtung entgegengesetzten zweiten Drehrichtung relativ zu dem Mutterelement 105 kann die erste Spannbacke 109 mittels der miteinander in Eingriff befindlichen Eingriffsstrukturen des Spindelkörpers 103 und der Rollenkörper des Mutterelements 105 weg von der zweiten Spannbacke 112 verlagert werden.

**Bezugszeichenliste**

| | | | |
|---|---|---|---|
| 1 | Spannvorrichtung | 35 | Rollen-Eingriffsstruktur |
| 3 | Spindelkörper | 37 | Steg |
| 5 | Mutterelement | 39 | Aufnahmekörper-Eingriffsstruktur |
| 7 | Bauteil | 41 | Wandbereich |
| 9 | Bauteil | 42 | Wandbereich |
| 10 | Schaft | 43 | Steg |
| 11 | Aufnahmekörper | 45 | Eingriffsbereich |
| 13 | Antriebsprofil | 47 | Spindel körper- Ei ng riffsstru ktu r |
| 14 | Rollenkörper | 49 | Steg |
| 15 | Stirnwand | 51 | Anfangsbereich |
| 17 | Lagerzapfen | 53 | Endbereich |
| 19 | Lagerkäfig | 55 | Aufnahmenut |
| 20 | Lagerkäfig | 57 | Schraubenkopf |
| 21 | Ausnehmung | 59 | Endanschlag |
| 23 | Hintergriffssteg | 61 | Spindelkörper |
| 25 | Ringsegmentelement | 63 | Spannvorrichtung |
| 27 | Ausnehmung | 65 | Mutterelement |
| 29 | mittlerer Bereich | 67 | Lagerkäfig |
| 31 | Zapfenaufnahme | 69 | Rollenkörper |
| 33 | Zapfenaufnahme | 71 | Spindelkörper |
| 73 | Schaft | 112 | Spannbacke |
| 75 | Spindelabschnitt | 22 | Ausnehmung |
| 77 | Spindelabschnitt | | |
| 79 | Eingriffsstruktur | | |
| 81 | Steg | | |
| 83 | Ausnehmung | | |
| 85 | Drehstift | | |
| 86 | Antriebsprofil | | |
| 87 | Umfangsabschnitt | | |
| 89 | Umfangsabschnitt | | |
| 91 | Spindelkörper | | |
| 93 | Drehstift | | |
| 95 | Stirnrad | | |
| 97 | Stirnrad | | |
| 99 | Antriebsprofil | | |
| 101 | Schraubstock | | |
| 103 | Spindelkörper | | |
| 105 | Mutterelement | | |
| 107 | Spannbackenelement | | |
| 109 | Spanbacke | | |
| 111 | Spannbackenelement | | |

## Patentansprüche

1. Spannvorrichtung zum Einspannen eines Gegenstands, mit einem Spindelkörper (3; 61; 71; 91; 103) und einem mit dem Spindelkörper (3; 61; 71; 91; 103) verschraubbaren Mutterelement (5; 65; 105), wobei durch Schraubbetätigung des Spindelkörpers (3; 61; 71; 91; 103) und/oder des Mutterelements (5; 65; 105) ein Abstand zwischen einem ersten und einem zweiten Spannelement der Spannvorrichtung (1; 63) verringerbar und somit ein zwischen den Spannelementen angeordneter Gegenstand mittels der Spannelemente einspannbar ist, wobei an dem Spindelkörper (3; 61; 71; 91; 103) mehrere, insbesondere in Umfangsrichtung (U) verteilte und/oder voneinander beabstandete, Eingriffsbereiche (45) mit jeweils einer Spindelkörper-Eingriffsstruktur (47) ausgebildet sind,
**dadurch gekennzeichnet,**
**dass** das Mutterelement (5; 65; 105) mehrere, insbesondere zylinderförmige, Rollenkörper (14; 69) mit einer definierten Rollen-Eingriffsstruktur (35) aufweist, wobei die Rollenkörper (14; 69) axial drehbar an einem, insbesondere hülsenförmigen, Aufnahmekörper (11) des Mutterelements (5; 65; 105) gehaltert sowie in Umfangsrichtung (U) verteilt an dem Mutterelement (5; 65; 105) angeordnet sind,
**dass** die Rollenkörper (14; 69) mit ihrer Rollen-Eingriffsstruktur (35) in Eingriff mit den Spindelkörper-Eingriffsstrukturen (47) des Spindelkörpers (3; 61; 71; 91; 103) sind oder bringbar sind, dass das Mutterelement (5; 65; 105) mittels der miteinander in Eingriff befindlichen Eingriffsstrukturen (35, 47) des Spindelkörpers (3; 61; 71; 91; 103) und der Rollenkörper (14; 69), insbesondere unter Abrollen der Rollenkörper auf dem Spindelkörper, mit dem Spindelkörper (3; 61; 71; 91; 103) verschraubbar ist.

2. Spannvorrichtung nach Anspruch 1, **dadurch gekennzeichnet, dass** die Spindelkörper-Eingriffsstruktur (47) jedes Spindelkörper-Eingriffsbereichs (45) durch mehrere voneinander beabstandete, umlaufende Rillen gebildet ist, durch die außenseitig um den Spindelkörper (3; 61; 71; 91; 103) verlaufende Stege (49) ausgebildet sind, wobei bevorzugt vorgesehen ist, dass die Spindelkörper-Stege (49) jedes Eingriffsbereichs (45) zueinander parallel verlaufen.

3. Spannvorrichtung nach Anspruch 2, **dadurch gekennzeichnet, dass** die Rillen jedes Spindelkörper-Eingriffsbereichs (45) ein Spindelkörper-Gewinde bilden, wobei bevorzugt vorgesehen ist, dass sich jedes Spindelkörper-Gewinde, in Umfangsrichtung (U) gesehen, von einem Anfangsbereich (51) bis zu einem Endbereich (53) erstreckt, und dass die Gewindesteigung jedes Spindelkörper-Gewindes ausgehend von dem Ausgangsbereich (51) hin zu dem Endbereich (53) konstant ist.

4. Spannvorrichtung nach einem der vorhergehenden Ansprüche, **dadurch gekennzeichnet, dass** jedem Spindelkörper-Eingriffsbereich (45) eine in Axialrichtung (x) verlaufende, in Umfangsrichtung (U) an den jeweiligen Spindelkörper-Eingriffsbereich (45) angrenzende, insbesondere zu den Rollenkörpern konturangepasste, Aufnahmenut (55) zugeordnet ist,
dass die Rollenkörper (14) des Mutterelements (5; 105) in einer definierten Drehposition des Mutterelements (5; 105) relativ zu dem Spindelkörper (3; 61; 103) mit einem Teilbereich in den Aufnahmenuten (55) angeordnet sind, und
dass bei in den Aufnahmenuten (55) angeordneten Rollenkörpern (14) die Eingriffsstrukturen (35, 47) des Spindelkörpers (3; 61; 103) und der Rollenkörper (14) außer Eingriff sind und das Mutterelement (5; 105) relativ zu dem Spindelkörper (3; 61; 103) in Axialrichtung (x) verschiebbar ist.

5. Spannvorrichtung nach einem der Ansprüche 1 bis 3, **dadurch gekennzeichnet, dass** jedem Spindelkörper-Eingriffsbereich (45) eine in Umfangsrichtung (U) an den jeweiligen Spindelkörper-Eingriffsbereich (45) angrenzende, insbesondere zylinderförmige und/oder in Axialrichtung verlaufende, Ausnehmung (83) zugeordnet ist,
dass in jeder Ausnehmung (83) ein Drehstift (85) axial drehbar gehaltert ist, wobei jeder Drehstift (85) einen Umfangsabschnitt (87) mit einer zu den Spindelkörper-Eingriffsstrukturen (47) korrespondierenden Drehstift-Eingriffsstruktur aufweist, und
dass in einer definierten Drehposition der Drehstifte (85) die Drehstift-Eingriffsstrukturen zusammen mit den Spindelkörper-Eingriffsstrukturen (47) eine umlaufende Eingriffsstruktur ausbilden.

6. Spannvorrichtung nach Anspruch 5, **dadurch gekennzeichnet, dass** jeder Drehstift (85) einen Umfangsabschnitt (89) mit einer Ausnehmung und/oder Abflachung aufweist, und dass in einer definierten Drehposition der Drehstifte (85) das Mutterelement (65) mit einem Teilbereich der Rollenkörper (69) in den Spindelkörper-Ausnehmungen (83) anordenbar ist, dergestalt, dass die Eingriffsstrukturen (35, 47) des Spindelkörpers (71) und der Rollenkörper (14) außer Eingriff sind und das Mutterelement (65) relativ zu dem Spindelkörper (71) in Axialrichtung (x) verschiebbar ist.

7. Spannvorrichtung nach einem der vorhergehenden Ansprüche, **dadurch gekennzeichnet, dass** die mehreren Spindelkörper-Eingriffsbereiche (45) an einem ersten Spindelabschnitt (75) des Spindelkörpers (71) ausgebildet sind, wobei sich an den ersten Spindelabschnitt (75) ein zweiter Spindelabschnitt (77) des Spindelkörpers (71) anschließt, an dem eine in Eingriff mit der Rollen-Eingriffsstruktur (35) der Rollenkörper (69) bringbare, vollständig umlaufende Eingriffsstruktur (79) ausgebildet ist.

8. Spannvorrichtung nach Anspruch 5, **dadurch gekennzeichnet, dass** die Eingriffsstruktur (79) des zweiten Spindelabschnitts (77) durch ein Gewinde mit mindestens einer umlaufenden Gewinde-Rille gebildet ist, wobei durch die Gewinde-Rille mindestens ein außenseitig um den Spindelkörper (71) wendelförmig verlaufender Steg (81) ausgebildet ist.

9. Spannvorrichtung nach einem der vorhergehenden Ansprüche, **dadurch gekennzeichnet, dass** die Rollen-Eingriffsstruktur (35) jedes Rollenkörpers (14) durch mehrere in Rollen-Axialrichtung voneinander beabstandete umlaufende Rillen gebildet ist, durch die sich in Umfangsrichtung um den jeweiligen Rollenkörper (14) erstreckende ringförmige Stege (37) ausgebildet sind.

10. Spannvorrichtung nach einem der vorhergehenden Ansprüche, **dadurch gekennzeichnet, dass** jeder Rollenkörper (14; 69) stirnseitig abragende Lagerzapfen (17) aufweist, mittels denen der jeweilige Rollenkörper (14; 69) axial drehbar an dem Aufnahmekörper (11) des Mutterelements (5) gehaltert ist.

11. Spannvorrichtung nach einem der vorhergehenden Ansprüche, **dadurch gekennzeichnet, dass** jeder Rollenkörper (14; 69), insbesondere mittels der Lagerzapfen, in einem ringförmigen, insbesondere kreisringförmigen, Lagerkäfig (19, 20; 67) des Mutterelements (5) axial drehbar gelagert ist, wobei bevorzugt vorgesehen ist, dass der ringförmige Lagerkäfig (19, 20; 67) mehrteilig mit mehreren, insbesondere im Querschnitt rechteckförmigen, Ringsegmentelementen (25) ausgebildet ist und zumindest einem Teil der Ringsegmentelemente (25) wenigstens ein Rollenkörper (14; 69) zugeordnet ist.

12. Spannvorrichtung nach Anspruch 11, **dadurch gekennzeichnet, dass** das Mutterelement (5; 105) mehrere, insbesondere zwei, in Axialrichtung (x) voneinander beabstandete Lagerkäfige (19, 20) aufweist, in denen jeweils mehrere Rollenkörper (14) axial drehbar gelagert sind.

13. Spannvorrichtung nach einem der vorhergehenden Ansprüche, **dadurch gekennzeichnet, dass** der hülsenförmige Aufnahmekörper (11) wenigstens eine Aufnahmekörper-Eingriffsstruktur (39) aufweist, mit der der Aufnahmekörper (11) in Eingriff mit der Rollen-Eingriffsstruktur (35) der Rollenkörper (14; 69) ist, wobei bevorzugt vorgesehen ist, dass die Aufnahmekörper-Eingriffsstruktur (39) durch mehrere voneinander beabstandete, umlaufende Rillen gebildet ist, durch die sich innenseitig in Umfangsrichtung (U) um den Aufnahmekörper (11) erstreckende ringförmige Stege (43) ausgebildet sind.

14. Spannvorrichtung nach einem der Ansprüche 11 bis 13, **dadurch gekennzeichnet, dass** der hülsenförmige Aufnahmekörper (11) wenigstens eine innenseitig in Umfangsrichtung (U) verlaufende Ausnehmung (21, 22) aufweist, in der der wenigstens eine ringförmige Lagerkäfig (19, 20; 67) konturangepasst angeordnet ist, wobei bevorzugt vorgesehen ist, dass ein die Ausnehmung (21, 22) bodenseitig begrenzender Wandbereich (41, 42) des hülsenförmigen Aufnahmekörpers (11) die Aufnahmekörper-Eingriffsstruktur (39) ausbildet.

15. Spannvorrichtung nach einem der vorhergehenden Ansprüche, **dadurch gekennzeichnet, dass** sich die Spindelkörper-Eingriffsstrukturen (47) über eine axiale Länge des Spindelkörpers (3; 61; 103) erstrecken, die um ein Vielfaches größer ist, insbesondere mehr als fünfmal so groß ist, als die axiale Länge der Rollenkörper (14).

16. Spannvorrichtung nach einem der vorhergehenden Ansprüche, **dadurch gekennzeichnet, dass** der Spindelköper (3; 61; 71; 91) einen Schraubenkopf (57) aufweist, wobei das Mutterelement (5; 65) das erste Spannelement und der Schraubenkopf (57) das zweite Spannelement ausbildet,
dass das, insbesondere ein Antriebsprofil aufweisende, Mutterelement (5; 65) durch Drehbetätigung in einer ersten Drehrichtung relativ zu dem Spindelkörper (3; 61; 71; 91) mittels der miteinander in Eingriff befindlichen Eingriffsstrukturen (35; 47) in Axialrichtung (x) hin zu dem Schraubenkopf (57) verlagerbar und somit ein Gegenstand einspannbar ist, und
dass das Mutterelement (5; 65) durch Drehbetätigung in einer zu der ersten Drehrichtung entgegengesetzten zweiten Drehrichtung relativ zu dem Spindelkörper (3; 61; 71; 91) mittels der miteinander in Eingriff befindlichen Eingriffsstrukturen (35; 47) in Axialrichtung (x) weg von dem Schraubenkopf (57) verlagerbar ist.

17. Spannvorrichtung nach einem der Ansprüche 1 bis 15, **dadurch gekennzeichnet, dass** der Spindelkörper (103) axial drehbar an einem ersten Spannbackenelement (107) mit einer ersten Spannbacke (109) gehaltert ist, wobei das Mutterelement (105) drehfest an einem zweiten Spannbackenelement (111) mit einer zweiten Spannbacke (113) gehaltert ist, wobei die erste Spannbacke (109) das erste Spannelement und die zweite Spannbacke (113) das zweite Spannelement ausbildet,
dass die erste Spannbacke (109) durch Drehbetätigung des Spindelkörpers (103) in einer ersten Drehrichtung relativ zu dem Mutterelement (105) mittels der miteinander in Eingriff befindlichen Eingriffsstrukturen hin zu der zweiten Spannbacke (113) verlagerbar und somit ein Gegenstand einspannbar ist, und
dass die erste Spannbacke (109) durch Drehbetätigung des Spindelkörpers (103) in einer zu der ersten Drehrichtung entgegengesetzten zweiten Drehrichtung relativ zu dem Mutterelement (105) mittels der miteinander in Eingriff befindlichen Eingriffsstrukturen weg von der zweiten Spannbacke (113) verlagerbar ist.

18. Vorrichtung, mit einer Spannvorrichtung nach Anspruch 16, und mit mehreren Bauteilen (7, 9), die mittels der Spannvorrichtung (1) miteinander verbunden sind, wobei jedes Bauteil (7, 9) eine durchgängige Ausnehmung aufweist, durch die der Spindelkörper (3) geführt ist, und wobei die Bauteile (7, 9) zwischen dem Mutterelement (5) und dem Schraubenkopf (57) des Spindelkörpers (3) eingespannt sind.

19. Schraubstock, mit einer Spannvorrichtung nach Anspruch 17.

## Claims

1. Clamping device for clamping an object, having a spindle body (3; 61; 71; 91; 103) and a nut element (5; 65; 105) that can be screwed together with the spindle body (3; 61; 71; 91; 103), wherein a distance between a first and a second clamping element of the clamping device (1; 63) can be reduced by screw actuation of the spindle body (3; 61; 71; 91; 103) and/or the nut element (5; 65; 105), and thus an object arranged between the clamping elements can be clamped in by means of the clamping elements, wherein a plurality of engagement regions (45) each having a spindle body engagement structure (47) are formed on the spindle body (3; 61; 71; 91; 103), in particular distributed in the circumferential direction (U) and/or spaced apart from one another,
**characterized in that**
the nut element (5, 65; 105) has a plurality of in particular cylindrical roller bodies (14; 69) with a defined roller engagement structure (35), wherein the roller bodies (14; 69) are axially rotatably secured on an in particular sleeve-like receiving body (11) of the nut element (5; 65; 105) and distributed in the circumferential direction (U) on the nut element (5; 65; 105),
**in that** the roller bodies (14; 69) are or can be brought with their roller engagement structure (35) into engagement with the spindle body engagement structures (47) of the spindle body (3; 61; 71; 91; 103),
**in that** the nut element (5; 65; 105) can be screwed together with the spindle body (3; 61; 71; 91; 103) by means of the engagement structures (35, 47) of the spindle body (3; 61; 71; 91; 103) and the roller body (14; 69) that are in engagement with one another, in particular with the roller bodies rolling on the spindle body.

2. Clamping device according to Claim 1, **characterized in that** the spindle body engagement structure (47) of each spindle body engagement region (45) is formed by a plurality of circumferential grooves spaced apart from one another, which form webs (49) extending around the outside of the spindle body (3; 61; 71; 91; 103), wherein provision is preferably made for the spindle body webs (49) of each engagement region (45) to extend parallel to one another.

3. Clamping device according to Claim 2, **characterized in that** the grooves of each spindle body engagement region (45) form a spindle body thread, wherein provision is preferably made for each spindle body thread, viewed in the circumferential direction (U), to extend from an initial region (51) as far as an end region (53), and for the thread pitch of each spindle body thread to be constant, starting from the initial region (51) to the end region (53).

4. Clamping device according to one of the preceding claims, **characterized in that** each spindle body engagement region (45) is assigned a receiving groove (55) extending in the axial direction (x), adjoining the respective spindle body engagement region (45) in the circumferential direction (U) and in particular having a contour matched to the roller bodies,
**in that** in a defined rotational position of the nut element (5; 105) relative to the spindle body (3; 61; 103), the roller bodies (14) of the nut element (5; 105) are arranged with a portion in the receiving grooves (55), and
**in that** when the roller bodies (14) are arranged in the receiving grooves (55), the engagement structures (35, 47) of the spindle body (3; 61; 103) and the roller bodies (14) are out of engagement and the nut element (5; 105) is displaceable in the axial direction (x) relative to the spindle body (3; 61; 103).

5. Clamping device according to one of Claims 1 to 3, **characterized in that** each spindle body engagement region (45) is assigned a recess (83) adjoining the respective spindle body engagement region (45) in the circumferential direction (U) and in particular being cylindrical and/or extending in the axial direction,
**in that** a rotary pin (85) is axially rotatably secured in each recess (83), wherein each rotary pin (85) has a circumferential section (87) with a rotary pin engagement structure corresponding to the spindle body engagement structures (47), and
**in that**, in a defined rotational position of the rotary pins (85), the rotary pin engagement structures form a circumferential engagement structure together with the spindle body engagement structures (47).

6. Clamping device according to Claim 5, **characterized in that** each rotary pin (85) has a circumferential section (89) with a recess and/or flattened portion, and **in that** in a defined rotational position of the rotary pins (85), the nut element (65) can be arranged with a portion of the roller bodies (69) in the spindle body recesses (83) in such a way that the engagement structures (35, 47) of the spindle body (71) and the roller bodies (14) are out of engagement, and the nut element (65) is displaceable in the axial direction (x) relative to the spindle bodies (71).

7. Clamping device according to one of the preceding claims, **characterized in that** the plurality of spindle body engagement regions (45) are formed on a first spindle section (75) of the spindle body (71), wherein the first spindle section (75) is adjoined by a second spindle section (77) of the spindle body (71), on which a completely circumferential engagement structure (79) that can be brought into engagement with the roller engagement structure (35) of the roller bodies (69) is formed.

8. Clamping device according to Claim 5, **characterized in that** the engagement structure (79) of the second spindle section (77) is formed by a thread having at least one circumferential thread groove, wherein the thread groove forms at least one web (81) extending helically around the outside of the spindle body (71).

9. Clamping device according to one of the preceding claims, **characterized in that** the roller engagement structure (35) of each roller body (14) is formed by a plurality of circumferential grooves spaced apart from one another in the roller axial direction and forming annular webs (37) extending around the respective roller body (14) in the circumferential direction.

10. Clamping device according to one of the preceding claims, **characterized in that** each roller body (14; 69) has bearing journals (17) projecting at the ends and axially rotatably securing the respective roller body (14; 69) on the receiving body (11) of the nut element (5) .

11. Clamping device according to one of the preceding claims, **characterized in that** each roller body (14; 69) is axially rotatably mounted in an annular, in particular circularly annular, bearing cage (19, 20; 67) of the nut element (5), in particular by means of the bearing journal, wherein provision is preferably made for the annular bearing cage (19, 20; 67) to be formed in several parts with a plurality of annular segment elements (25) that are in particular rectangular in cross section, and for at least one roller body (14; 69) to be assigned to at least some of the annular segment elements (25).

12. Clamping device according to Claim 11, **characterized in that** the nut element (5; 105) has a plurality of bearing cages (19, 20), in particular two, spaced apart from one another in the axial direction (x) and in each of which multiple roller bodies (14) are axially rotatably mounted.

13. Clamping device according to one of the preceding claims, **characterized in that** the sleeve-like receiving body (11) has at least one receiving body engagement structure (39), with which the receiving body (11) is in engagement with the roller engagement structure (35) of the roller bodies (14; 69), wherein provision is preferably made for the receiving body engagement structure (39) to be formed by a plurality of circumferential grooves spaced apart from one another and forming annular webs (43) extending around the inside of the receiving body (11) in the circumferential direction (U) .

14. Clamping device according to one of Claims 11 to 13, **characterized in that** the sleeve-like receiving body (11) has at least one recess (21, 22) extending on the inside in the circumferential direction (U), in which the at least one annular bearing cage (19, 20; 67) is arranged with a matched contour, wherein provision is preferably made for a wall region (41, 42) of the sleeve-like receiving body (11), delimiting the recess (21, 22) at the bottom, to form the receiving body engagement structure (39).

15. Clamping device according to one of the preceding claims, **characterized in that** the spindle body engagement structures (47) extend over an axial length of the spindle body (3; 61; 103) which is many times larger than, in particular more than five times as large as, the axial length of the roller bodies (14).

16. Clamping device according to one of the preceding claims, **characterized in that** the spindle body (3; 61; 71; 91) has a screw head (57), wherein the nut element (5; 65) forms the first clamping element and the screw head (57) forms the second clamping element,
**in that** by means of a rotational actuation in a first direction of rotation relative to the spindle body (3; 61; 71; 91), the nut element (5; 65), in particular having a drive profile, can be displaced in the axial direction (x) towards the screw head (57) by means of the engagement structures (35; 47) that are in engagement with one another, and thus an object can be clamped in, and
**in that**, by means of a rotational actuation in a second direction of rotation relative to the spindle body (3; 61; 71; 91) opposite to the first direction of rotation, the nut element (5; 65) can be displaced in the axial direction (x) away from the screw head (57) by means of the engagement structures (35; 47) that are in engagement with one another.

17. Clamping device according to one of Claims 1 to 15, **characterized in that** the spindle body (103) is axially rotatably secured on a first clamping jaw element (107) having a first clamping jaw (109), wherein the nut element (105) is co-rotationally held on a second clamping jaw element (111) having a second clamping jaw (113), wherein the first clamping jaw (109) forms the first clamping element and the second clamping jaw (113) forms the second clamping element,
**in that** by means of a rotational actuation of the spindle body (103) in a first direction of rotation relative to the nut element (105), the first clamping jaw (109) can be displaced towards the second clamping jaw (113) by means of the engagement structures that are in engagement with one another, and thus an object can be clamped in, and
**in that** by means of a rotational actuation of the spindle body (103) in a second direction of rotation relative to the nut element (105) opposite to the first direction of rotation, the first clamping jaw (109) can be displaced away from the second clamping jaw (113) by means of the engagement structures that are in engagement with one another.

18. Device having a clamping device according to Claim 16 and having a plurality of components (7, 9) which are connected to one another by means of the clamping device (1), wherein each component (7, 9) has a continuous recess through which the spindle body (3) is led, and wherein the components (7, 9) are clamped in between the nut element (5) and the screw head (57) of the spindle body (3).

19. Vice having a clamping device according to Claim 17.

## Revendications

1. Dispositif de serrage permettant de serrer un objet, comportant un corps de broche (3 ; 61 ; 71 ; 91 ; 103) et un élément écrou (5 ; 65 ; 105) pouvant être vissé sur le corps de broche (3 ; 61 ; 71 ; 91 ; 103), une distance entre un premier et un deuxième élément de serrage du dispositif de serrage (1 ; 63) pouvant être réduite et par conséquent un objet disposé entre les éléments de serrage pouvant être serré au moyen des éléments de serrage par un actionnement de vissage du corps de broche (3 ; 61 ; 71 ; 91 ; 103) et/ou de l'élément écrou (5 ; 65 ; 105), plusieurs régions d'entrée en prise (45) en particulier réparties dans la direction périphérique (U) et/ou espacées les unes des autres étant réalisées sur le corps de broche (3 ; 61 ; 71 ; 91 ; 103), lesquelles comportent respectivement une structure d'entrée en prise de corps de broche (47), **caractérisé en ce que** l'élément écrou (5 ; 65 ; 105) comprend plusieurs corps formant rouleaux (14 ; 69) en particulier cylindriques dotés d'une structure d'entrée en prise de rouleau (35) définie, les corps formant rouleaux (14 ; 69) étant supportés de manière axialement rotative sur un corps de réception (11), en particulier en forme de douille, de l'élément écrou (5 ; 65 ; 105) et étant disposés sur l'élément écrou (5 ; 65 ; 105) de manière répartie dans la direction périphérique (U),
**en ce que** les corps formant rouleaux (14 ; 69), par leur structure d'entrée en prise de rouleau (35), sont ou peuvent être amenés en prise avec les structures d'entrée en prise de corps de broche (47) du corps de broche (3 ; 61 ; 71 ; 91 ; 103), **en ce que** l'élément écrou (5 ; 65 ; 105) peut être vissé sur le corps de broche (3 ; 61 ; 71 ; 91 ; 103) au moyen des structures d'entrée en prise (35, 47), se trouvant en prise les unes avec les autres, du corps de broche (3 ; 61 ; 71 ; 91 ; 103) et des corps formant rouleaux (14 ; 69), en particulier avec roulement des corps formant rouleaux sur le corps de broche.

2. Dispositif de serrage selon la revendication 1, **caractérisé en ce que** la structure d'entrée en prise de corps de broche (47) de chaque région d'entrée en prise de corps de broche (45) est formée par plusieurs rainures périphériques espacées les unes des autres, par lesquelles des nervures (49) s'étendant du côté extérieur autour du corps de broche (3 ; 61 ; 71 ; 91 ; 103) sont formées, les nervures de corps de broche (49) de chaque région d'entrée en prise (45) s'étendant de préférence parallèlement les unes aux autres.

3. Dispositif de serrage selon la revendication 2, **caractérisé en ce que** les rainures de chaque région d'entrée en prise de corps de broche (45) forment un filetage de corps de broche, chaque filetage de corps de broche, vu dans la direction périphérique (U), s'étendant de préférence d'une région de départ (51) à une région d'extrémité (53), et **en ce que** le pas de chaque filetage de corps de broche est constant à partir de la région de départ (51) vers la région d'extrémité (53).

4. Dispositif de serrage selon l'une des revendications précédentes, **caractérisé en ce qu'**une rainure de réception (55) s'étendant dans la direction axiale (x), adjacente à la région d'entrée en prise de corps de broche (45) respective dans la direction périphérique (U), en particulier de contour adapté à celui des corps formant rouleaux, est associée à chaque région d'entrée en prise de corps de broche (45),
**en ce que** les corps formant rouleaux (14) de l'élément écrou (5 ; 105) sont disposés par une région partielle dans les rainures de réception (55) dans une position angulaire définie de l'élément écrou (5 ; 105) par rapport au corps de broche (3 ; 61 ; 103), et
**en ce que**, lorsque les corps formant rouleaux (14) sont disposés dans les rainures de réception (55), les structures d'entrée en prise (35, 47) du corps de broche (3 ; 61 ; 103) et des corps formant rouleaux (14) sont hors de prise et l'élément écrou (5 ; 105) est déplaçable dans la direction axiale (x) par rapport au corps de broche (3 ; 61 ; 103).

5. Dispositif de serrage selon l'une des revendications 1 à 3, **caractérisé en ce qu'**un évidement (83) adjacent à la région d'entrée en prise de corps de broche (45) respective dans la direction périphérique (U), en particulier cylindrique et/ou s'étendant dans la direction axiale, est associé à chaque région d'entrée en prise de corps de broche (45),
**en ce qu'**une goupille rotative (85) est supportée de manière axialement rotative dans chaque évidement (83), chaque goupille rotative (85) comprenant une partie périphérique (87) dotée d'une structure d'entrée en prise de goupille rotative correspondant aux structures d'entrée en prise de corps de broche (47), et
**en ce que**, dans une position angulaire définie des goupilles rotatives (85), les structures d'entrée en prise de goupille rotative forment conjointement avec les structures d'entrée en prise de corps de broche (47) une structure d'entrée en prise périphérique.

6. Dispositif de serrage selon la revendication 5, **caractérisé en ce que** chaque goupille rotative (85) comprend une partie périphérique (89) dotée d'un évidement et/ou d'un aplatissement, et
**en ce que**, dans une position angulaire définie des goupilles rotatives (85), l'élément écrou (65) peut être disposé par une région partielle des corps formant rouleaux (69) dans les évidements de corps de broche (83), de telle sorte que les structures d'entrée en prise (35, 47) du corps de broche (71) et des corps formant rouleaux (14) soient hors de prise et que l'élément écrou (65) soit déplaçable par rapport au corps de broche (71) dans la direction axiale (x).

7. Dispositif de serrage selon l'une des revendications précédentes, **caractérisé en ce que** les plusieurs régions d'entrée en prise de corps de broche (45) sont réalisées sur une première partie de broche (75) du corps de broche (71), une deuxième partie de broche (77) du corps de broche (71) se raccordant à la première partie de broche (75), deuxième partie sur laquelle est réalisée une structure d'entrée en prise (79) complètement périphérique pouvant être amenée en prise avec la structure d'entrée en prise de rouleau (35) des corps formant rouleaux (69).

8. Dispositif de serrage selon la revendication 5, **caractérisé en ce que** la structure d'entrée en prise (79) de la deuxième partie de broche (77) est formée par un filetage doté d'au moins une rainure de filetage périphérique, au moins une nervure (81) s'étendant de manière hélicoïdale du côté extérieur autour du corps de broche (71) étant formée par la rainure de filetage.

9. Dispositif de serrage selon l'une des revendications précédentes, **caractérisé en ce que** la structure d'entrée en prise de rouleau (35) de chaque corps formant rouleau (14) est formée par plusieurs rainures périphériques espacées les unes des autres dans la direction axiale de rouleau, par lesquelles des nervures (37) annulaires s'étendant dans la direction périphérique autour du corps formant rouleau (14) respectif sont formées.

10. Dispositif de serrage selon l'une des revendications précédentes, **caractérisé en ce que** chaque corps formant rouleau (14 ; 69) comprend des tourillons de palier (17) faisant saillie du côté frontal, au moyen desquels le corps formant rouleau (14 ; 69) respectif est supporté de manière axialement rotative sur le corps de réception (11) de l'élément écrou (5).

11. Dispositif de serrage selon l'une des revendications précédentes, **caractérisé en ce que** chaque corps formant rouleau (14 ; 69) est, en particulier au moyen des tourillons de palier, supporté de manière axialement rotative dans une cage de palier (19, 20 ; 67) annulaire, en particulier en forme d'anneau circulaire, de l'élément écrou (5), la cage de palier (19, 20 ; 67) annulaire étant formée de préférence en plusieurs parties avec plusieurs éléments formant segments annulaires (25) en particulier de forme rectangulaire en section transversale, et au moins un corps formant rouleau (14 ; 69) étant associé à au moins une partie des éléments formant segments annulaires (25).

12. Dispositif de serrage selon la revendication 11, **caractérisé en ce que** l'élément écrou (5 ; 105) comprend plusieurs, en particulier deux cages de palier (19, 20) espacées l'une de l'autre dans la direction axiale (x), dans lesquelles plusieurs corps formant rouleaux (14) sont supportés de manière axialement rotative respectivement.

13. Dispositif de serrage selon l'une des revendications précédentes, **caractérisé en ce que** le corps de réception (11) en forme de douille comprend au moins une structure d'entrée en prise de corps de réception (39), par laquelle le corps de réception (11) est en prise avec la structure d'entrée en prise de rouleau (35) des corps formant rouleaux (14 ; 69), la structure d'entrée en prise de corps de réception (39) étant formée de préférence par plusieurs rainures périphériques espacées les unes des autres, par lesquelles des nervures (43) annulaires s'étendant du côté intérieur dans la direction périphérique (U) autour du corps de réception (11) sont formées.

14. Dispositif de serrage selon l'une des revendications 11 à 13, **caractérisé en ce que** le corps de réception (11) en forme de douille comprend au moins un évidement (21, 22) s'étendant du côté intérieur dans la direction périphérique (U), dans lequel l'au moins une cage de palier (19, 20 ; 67) annulaire est disposée de manière adaptée au contour, une région de paroi (41, 42), délimitant l'évidement (21, 22) du côté du fond, du corps de réception (11) en forme de douille formant de préférence la structure d'entrée en prise de corps de réception (39).

15. Dispositif de serrage selon l'une des revendications précédentes, **caractérisé en ce que** les structures d'entrée en prise de corps de broche (47) s'étendent sur une longueur axiale du corps de broche (3 ; 61 ; 103) qui est plus grande d'un multiple, en particulier est plus de cinq fois plus grande, que la longueur axiale des corps formant rouleaux (14).

16. Dispositif de serrage selon l'une des revendications précédentes, **caractérisé en ce que** le corps de broche (3 ; 61 ; 71 ; 91) comprend une tête de vis (57), l'élément écrou (5 ; 65) formant le premier élément de serrage et la tête de vis (57) formant le deuxième élément de serrage, **en ce que** l'élément écrou (5 ; 65) comprenant en particulier un profil d'entraînement est déplaçable dans la direction axiale (x) vers la tête de vis (57) par actionnement rotatif dans un premier sens de rotation par rapport au corps de broche (3 ; 61 ; 71 ; 91) au moyen des structures d'entrée en prise (35 ; 47) se trouvant en prise les unes avec les autres et un objet peut par conséquent être serré, et
**en ce que** l'élément écrou (5 ; 65) est déplaçable dans la direction axiale (x) à l'écart de la tête de vis (57) par actionnement rotatif dans un deuxième sens de rotation opposé au premier sens de rotation par rapport au corps de broche (3 ; 61 ; 71 ; 91) au moyen des structures d'entrée en prise (35 ; 47) se trouvant en prise les unes avec les autres.

17. Dispositif de serrage selon l'une des revendications 1 à 15, **caractérisé en ce que** le corps de broche (103) est supporté de manière axialement rotative sur un premier élément de mâchoire de serrage (107) doté d'une première mâchoire de serrage (109), l'élément écrou (105) étant supporté de manière solidaire en rotation sur un deuxième élément de mâchoire de serrage (111) doté d'une deuxième mâchoire de serrage (113), la première mâchoire de serrage (109) formant le premier élément de serrage et la deuxième mâchoire de serrage (113) formant le deuxième élément de serrage,
**en ce que** la première mâchoire de serrage (109) est déplaçable vers la deuxième mâchoire de serrage (113) par actionnement rotatif du corps de broche (103) dans un premier sens de rotation par rapport à l'élément écrou (105) au moyen des structures d'entrée en prise se trouvant en prise les unes avec les autres et un objet peut par conséquent être serré, et
**en ce que** la première mâchoire de serrage (109) est déplaçable à l'écart de la deuxième mâchoire de serrage (113) par actionnement rotatif du corps de broche (103) dans un deuxième sens de rotation opposé au premier sens de rotation par rapport à l'élément écrou (105) au moyen des structures d'entrée en prise se trouvant en prise les unes avec les autres.

18. Dispositif, comportant un dispositif de serrage selon la revendication 16, et comportant plusieurs composants (7, 9) qui sont reliés les uns aux autres au moyen du dispositif de serrage (1), chaque composant (7, 9) comprenant un évidement continu, à travers lequel le corps de broche (3) est guidé, et les composants (7, 9) étant serrés entre l'élément écrou (5) et la tête de vis (57) du corps de broche (3).

19. Etau, comportant un dispositif de serrage selon la revendication 17.
